# EUROPEAN PATENT APPLICATION

(11) **EP 3 392 722 A1**
(43) Date of publication of application: **24.10.2018**
(21) Application number: 18165905.3
(22) Date of filing: 05.04.2018
(51) Int. Cl.: G05B 15/02

(54) **METHOD AND SYSTEM FOR SPECIFYING CUSTOMIZED DISPLAY SCREENS FOR A BUILDING AUTOMATION SYSTEM**

(30) Priority: 19.04.2017 US 201715491733
(71) Applicant: Honeywell International Inc., Morris Plains, NJ New Jersey 07950 (US)
(72) Inventor: BRISBINE, Patrick, Morris Plains, NJ New Jersey 07950 (US); REEDER, Jeffrey Michael, Morris Plains, NJ New Jersey 07950 (US); CALLAHAN, Kevin Michael, Morris Plains, NJ New Jersey 07950 (US)
(74) Representative: Houghton, Mark Phillip

(57) **Abstract**

Unique device identifiers, point names, and an order of the point names may be specified in a tabular template. The tabular template may be processed such that the unique device identifiers may be converted into device addresses and executable code is output. The executable code may then be executed such that a summary screen may be displayed that includes a device name for the identified devices. Current parameter values that correspond to the point names may also be displayed in the specified order.

## Description

### TECHNICAL FIELD

The disclosure relates generally to building automation systems, and more particularly to summarizing parameters for devices of a building automation system.

### BACKGROUND

Building automation systems are commonly used to control one or more systems of a building, such as a Heating, Ventilation and/or Air Conditioning (HVAC) system, a security system, a lighting system and/or other systems of a building. In many cases, the building automation system includes many building control devices distributed throughout the building. Because buildings are often unique and have unique operational requirements, building automation system must typically be adapted or customized for each building installation. To do so, installers must typically install particular building control devices at designated locations within the building, and connect the installed building control devices to a building controller or the like. The building controller must typically be customized to recognize the particular building control devices that are installed at the building installation, and to display information such as data and settings that is relevant to the particular building installation.

Developing screens that display relevant information for a particular building automation system can be time consuming, tedious and error prone. For some users, such tasks can be even more difficult due to the need to understand specific installation details, such as the available input/output point addresses of each of the various building control devices used in the building automation system. What would be desirable is a system and method that allows an installer or other user to more easily customize screens that display relevant information for a particular building automation system.

### SUMMARY

The disclosure is directed toward a system and method that allows an installer or other user to more easily customize screens that display relevant information for a particular building automation system. In one example, a customized summary screen is provided. The customized summary screen may summarize two or more parameters for each of two or more building control devices of a building automation system.

In some cases, the disclosure pertains to specifying unique device identifiers, point names, and an order of the point names using a tabular template. The tabular template may be processed such that the unique device identifiers may be converted into device addresses, and executable code may be output. The executable code, when executed, may display a summary screen that includes a device name for the devices identified in the tabular template. Current parameter values that correspond to the point names may also be displayed in the specified order in the summary screen.

In an example of the disclosure, a method may generate a summary screen that may summarize two or more parameters of each of two or more devices of a building automation system. Each of the two or more parameters may have a corresponding point name such that when a device of the two or more devices receives a request that references the point name, the device may respond by sending a current value of the corresponding parameter for that device. The method may include specifying, in a tabular template, a unique device identifier for each of the two or more devices that are to be included in the summary screen. Two or more point names for the two or more parameters that are to be included in the summary screen may also be specified in the tabular template, along with a desired order of the two or more point names. Processing the tabular template may convert the unique device identifier for each of the two or more devices into a corresponding device address that is suitable for addressing the device in the building automation system, and may output executable code that when executed may display a summary screen that comprises a device name for each of the two or more devices identified in the tabular template and a current value for each of the parameters that correspond to the point names specified in the tabular template for each of the two more devices identified in the tabular template, wherein the current value for each of the parameters may be displayed in the specified order in the summary screen. The executable code may be executed to display the summary screen on a display.

Alternatively or additionally to any of the embodiments above, the executable code may include requests that, when executed, may reference the point names specified in the tabular template for each of the two or more devices specified in the tabular template.

Alternatively or additionally to any of the embodiments above, specifying, in the tabular template, one or more formatting parameters that may be applied to the current values in the summary screen. The formatting parameter may be specified for certain point names and/or certain devices specified in the tabular template.

Alternatively or additionally to any of the embodiments above, the tabular template may comprise a formatting region for specifying the one or more formatting parameters for each of the two or more point names and/or devices specified in the tubular template.

Alternatively or additionally to any of the embodiments above, the one or more formatting parameters specified in the formatting region for each of the two or more point names specified in the tubular template may be applied to each of the two more devices identified in the tabular template.

Alternatively or additionally to any of the embodiments above, for each of the two more devices identified in the tabular template, the tabular template may comprise a device formatting region for overriding the one or more formatting parameters specified in the point name formatting region for that device.

Alternatively or additionally to any of the embodiments above, the one or more formatting parameters may comprise a number of decimal places to display on the summary screen for the corresponding parameter.

Alternatively or additionally to any of the embodiments above, the one or more formatting parameters may comprise a text string to display on the summary screen for the corresponding parameter.

Alternatively or additionally to any of the embodiments above, the one or more formatting parameters may comprise a polling policy that identifies how often to update the current value on the summary screen for the corresponding parameter.

Alternatively or additionally to any of the embodiments above, for each of the two more devices identified in the tabular template, the tabular template may comprise a region to specify a graphical representation of the corresponding device.

Alternatively or additionally to any of the embodiments above, each of the two or more devices identified in the tabular template in the summary screen may include a link, that when selected, may display the specified graphical representation of the device.

Alternatively or additionally to any of the embodiments above, the device name for each of the two or more devices may function as the link.

Alternatively or additionally to any of the embodiments above, the graphical representation of the corresponding device may be an animated graphical representation.

Alternatively or additionally to any of the embodiments above, the graphical representation of the corresponding device may display current values of one or more parameters that are not displayed on the summary screen.

In another example of the disclosure, a method may generate a summary screen that may summarize two or more parameters of each of two or more devices of a building automation system. Each of the two or more parameters may have a corresponding point name such that when a device of the two or more devices receives a request that references the point name, the device may respond by sending a current value of the corresponding parameter for that device. The method may include: specifying, in a device identifying region of a template, a unique device identifier for each of the two or more devices that are to be included in a summary screen; specifying, in a global point region of the template, two or more point names for the two or more parameters that are to be included in the summary screen for each of the two or more devices specified in the device identifying region; specifying, in the global point region of the template, the order of the two or more point names. The template may then be processed by a processing module to output executable code that when executed may display a summary screen that includes a device name for each of the two or more devices identified in the device identifying region of a template and a current value for each of the parameters that correspond to the point names specified in the global point region of the template for each of the two more devices identified in the device identifying region of the template, where the current values for each of the parameters may be displayed in the specified order in the summary screen. The executable code may then be executed to display the summary screen on a display.

Alternatively or additionally to any of the embodiments above, the executable code may include requests that, when executed, may reference the point names specified in the global point region of the template for each of the two or more devices specified in the device identifying region of the template.

Alternatively or additionally to any of the embodiments above, specifying, in the global point region of the template, one or more formatting parameters that may be applied to the current value in the summary screen for the parameter that may correspond to one of the point names specified in the global point region of the template.

Alternatively or additionally to any of the embodiments above, the one or more formatting parameters specified in the global point region of the template may be applied to the current value in the summary screen for the parameter that corresponds to the one of the point names specified in the global point region of the template for each of the two or more devices specified in the device identifying region of the template.

Alternatively or additionally to any of the embodiments above, for each of the two more devices identified in the device identifying region of the template, the template may comprise a device formatting region for overriding the formatting parameters specified in the global point region of the template.

In another example of the disclosure, a system may generate a summary screen that summarizes two or more parameters of each of two or more devices of a building automation system. Each of the two or more parameters may have a corresponding point name such that when a device of the two or more devices receives a request that references the point name, the device may respond by sending a current value of the corresponding parameter for that device. The system may include a tabular template processing module configured to receive a tabular template that identifies a unique device identifier for each of the two or more devices that are to be included in the summary screen and two or more point names for the two or more parameters that are to be included in the summary screen. The tabular template processing module may be configured to convert the unique device identifier for each of the two or more devices into a corresponding device address that may be suitable for addressing the device in the building automation system, and to output executable code that when executed displays the desired summary screen. The summary screen may comprises a device name for each of the two or more devices identified in the tabular template and a current value for each of the parameters that may correspond to the point names specified in the tabular template for each of the two more devices identified in the tabular template, where the current values for each of the parameters may be displayed in the specified order in the summary screen. A summary screen display module may be configured to execute the executable code, which when executed, may use the device addresses for the two or more devices that are to be included in the summary screen and the point names for the two or more parameters that are to be included in the summary screen to request the current values of the parameters that correspond to the point names from each of the two or more devices, and to display the summary screen on a display.

The above summary of some illustrative embodiments is not intended to describe each disclosed embodiment or every implementation of the present disclosure. The Figures and Description which follow more particularly exemplify these and other illustrative embodiments.

### BRIEF DESCRIPTION OF THE FIGURES

The disclosure may be more completely understood in consideration of the following description in connection with the accompanying drawings, in which:
Figure 1 is a schematic block diagram of an illustrative system;
Figure 2 is a flow diagram of an illustrative method;
Figure 3 is a diagram of an illustrative tabular template;
Figure 4A shows an illustrative summary screen;
Figure 4B shows an illustrative summary screen in an edit mode;
Figure 5 shows an illustrative graphical representation of one of the devices of the summary screen of Figure 4A; and
Figure 6 is a flow diagram of an illustrative method.

While the disclosure is amenable to various modifications and alternative forms, specifics thereof have been shown by way of example in the drawings and will be described in detail. It should be understood, however, that the intention is not to limit the disclosure to the particular embodiments described. On the contrary, the intention is to cover all modifications, equivalents, and alternatives falling within the spirit and scope of the disclosure.

### DESCRIPTION

For the following defined terms, these definitions shall be applied, unless a different definition is given in the claims or elsewhere in this specification.

All numeric values are herein assumed to be modified by the term "about," whether or not explicitly indicated. The term "about" generally refers to a range of numbers that one of skill in the art would consider equivalent to the recited value (i.e., having the same function or result). In many instances, the terms "about" may include numbers that are rounded to the nearest significant figure.

The recitation of numerical ranges by endpoints includes all numbers within that range (e.g. 1 to 5 includes 1, 1.5, 2, 2.75, 3, 3.80, 4, and 5).

As used in this specification and the appended claims, the singular forms "a", "an", and "the" include plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include one or more particular features, structures, and/or characteristics. However, such recitations do not necessarily mean that all embodiments include the particular features, structures, and/or characteristics. Additionally, when particular features, structures, and/or characteristics are described in connection with one embodiment, it should be understood that such features, structures, and/or characteristics may also be used connection with other embodiments whether or not explicitly described unless clearly stated to the contrary.

The following description should be read with reference to the drawings in which similar structures in different drawings are numbered the same. The drawings, which are not necessarily to scale, depict illustrative embodiments and are not intended to limit the scope of the disclosure.

Certain embodiments of the present disclosure may be found in a method and/or system for generating a summary screen that summarizes parameters for devices of a building automations system. In various embodiments, a controller, for example, a computer system, a control server and/or another controller, may be configured to monitor one or more operations of building control devices of a building automation system located in or around a building. In this regard, a description or summary of the status of the building control devices may be presented to a user. This disclosure describes systems and methods that allow an installer or other user to more easily customize screens that display relevant information for a particular building automation system. In one example, a customized summary screen is provided. The customized summary screen may summarize two or more parameters for each of two or more building control devices of a building automation system.

According to various embodiments, a system may present a tabular template to a user. The user may use the tabular template to specify or provide unique identifiers for each building control device to be included in a summary screen. The user may also use the tabular template to specify or provide point names that correspond to parameters for each device. In some cases, the point names are provided in a global region of the tabular template and are used for all of the building control devices listed on the tabular template. The system may process the tabular template and convert the unique identifiers for each building control device into corresponding unique addresses. Each identified building control device may then be located using the unique address, such as with a cross-reference table or the like. Using the unique addresses, each identified building control device may be queried with the specified point names to obtain the current values of the parameters that correspond to the point names. The system may then display in a summary screen a descriptive name of each identified building control device along with the current values of the parameter that correspond to the point names specified in the tabular template.
In some cases, the descriptive name may be more descriptive than the unique identifier entered into the tabular template and/or the device address. For example, the descriptive name may provide an indication of a device type, a device instance and a device location for the corresponding building control device.

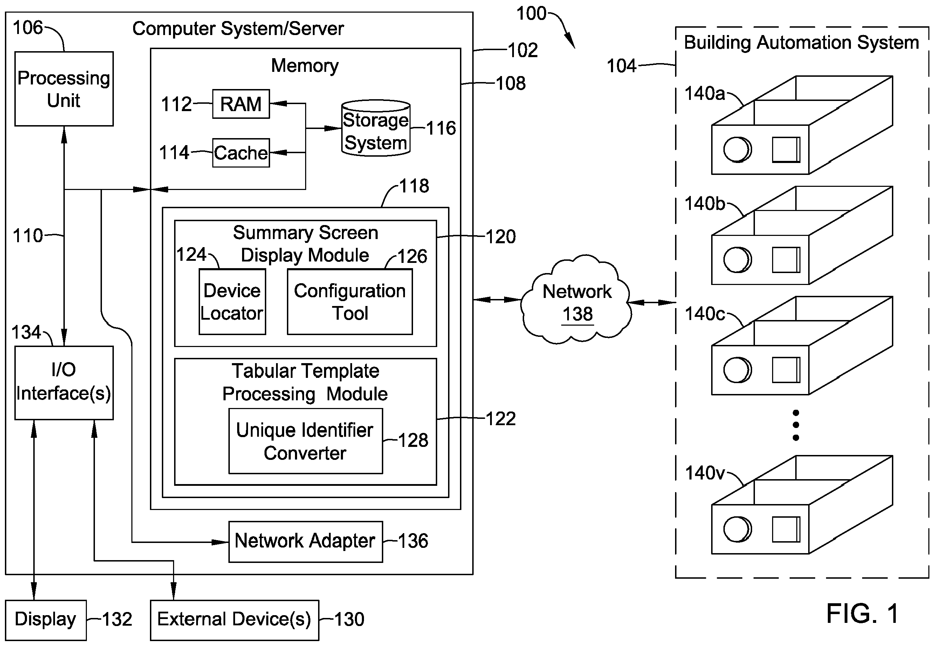

Figure 1 is a schematic block diagram of an illustrative system 100 for generating a summary screen that summarizes parameters for building control devices of a building automation system 104. In certain embodiments, the system 100 may include a computer system/server 102 and a building automation system 104. As shown, the building automation system 104 may include a plurality of building control devices 140A-140V. The building control devices 140A-140V are exemplary endpoint devices that provide a building control function. Each of the building control devices 140A-140V may include suitable logic, circuitry and/or code for storing one or more parameters associated with the operation of the building control device. Each of the parameters may have a corresponding point name such that when the building control device receives a request that references the corresponding point name, the building control device may respond by sending a current value of the corresponding parameter (e.g. via network 138).

In some cases, the building control devices 140A-140V may be an exemplary representation of any building automation system that may include, but is not limited to, a security system, a Heating, Ventilation and/or Air Conditioning (HVAC) system, a lighting and/or low voltage system, a water management system, an entertainment system, a communication system, and/or any other suitable building automation system.

In some cases, the building automation system 104 may be managed or controlled using a controller (not shown in Figure 1) that is operatively connected to building control devices 140A-140V. In some examples, the controller may be the computer system/server 102 as shown in Figure 1, but this is not required. In some cases, the controller may be operatively connected to the building control devices 140A-140V through a wired or wireless network 138.

For example, in some embodiments, the building control devices 140A-140V may include lighting or appliance devices and the controller may communicate with the lighting/appliance devices through serial and/or parallel communication. In some cases, the lighting/appliance devices may include, but are not limited to, outlets, lighting, drapes, and general load switching, some of which are subject to "dimming" control which varies the amount of power provided to the various building control devices. Alternatively, or in addition, the building control devices 140A-140V may include environmental devices and the controller may communicate with the environmental devices through serial and/or parallel communication. The environmental devices may include, but is not limited to, one or more HVAC control devices (e.g. Variable-Air-Volume (VAV) units, dampers, valves, fans, heating units, cooling units, sensors, thermostats, humidifiers, dehumidifiers etc.), which allow for the monitoring and/or control of temperature and/or other environmental conditions in the building. Alternatively, or in addition, the building control devices 140A-140V may include security and/or fire devices and the controller may communicate with the security and/or fire devices through serial and/or parallel communication. The security and/or fire devices may include, for example, smoke/heat sensors, electronic gates, electronic locks, contact sensors for monitoring the state of doors and windows, security card pass systems, etc. Alternatively, or in addition, the building control devices 140A-140V may include a variety of low voltage devices, and the controller may communicate with the low voltage devices through serial and/or parallel communication. In some cases, the low voltage devices may include, but are not limited to, garage doors, lawn sprinklers, exterior lights, and pool/spa heaters (via a relay or the like). These are just example building control devices.

According to certain embodiments, the building automation system 104 and the computer system/server 102 may utilize a network 138 to communicate. In some examples, the network 138 may be a local area network (LAN), a general wide area network (WAN), and/or a public network (e.g., the Internet). Furthermore, in some cases, the network 138 may comprise copper transmission cables, optical transmission fibers, wireless transmission, routers, firewalls, switches, gateway computers and/or edge servers. In certain instances, a network adapter is included in the computer system/server 102 (e.g., the network adapter 136) and/or a network adapter (not shown) is included with each device 140A-140V to support communication. In some cases, the building automation system 104 includes the computer system/server 102.

As shown in Figure 1, the computer system/server 102 may be in the form of a general-purpose computing system, but this is not required. In some cases, the computer system/server 102 may be special purpose computing system. The components of computer system/server 102 may include, but are not limited to, one or more processors or processing units 106, a system memory 108, and a bus 110 that couples various system components including system memory 108 to the processor 106. When provided, the bus 110 may represent one or more of any of several types of bus structures, including a memory bus or memory controller, a peripheral bus, an accelerated graphics port, and a processor or local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus.

Computer system/server 102 may include a variety of computer system readable media. Such media may be any available media that is accessible by computer system/server 102, and it may include volatile memory, non-volatile memory, removable and non-removable media.

The system memory 108 can include computer system readable media in the form of volatile memory, such as random access memory (RAM) 112 and/or cache memory 114. Computer system/server 102 may further include other removable/non-removable, volatile/non-volatile computer system storage media. By way of example only, storage system 116 can be provided for reading from and writing to a non-removable, non-volatile magnetic media (not shown and typically called a "hard drive"). Although not shown, a magnetic disk drive for reading from and writing to a removable, non-volatile magnetic disk (e.g., a "floppy disk"), and an optical disk drive for reading from or writing to a removable, non-volatile optical disk such as a CD-ROM, DVD-ROM or other optical media can be provided. In such instances, each can be connected to the bus 110 by one or more data media interfaces. As will be further depicted and described below, the memory 108 may include program modules, which when executed, may be configured to carry out the functions for generating a summary screen that summarizes parameters for building control devices of the building automation system 104.

Program/utility 118 may be stored in the memory 108 and may include a set of application program modules (e.g. software), such as a summary screen display module 120 and a tabular template processing module 122. In some cases, the program/utility 118 may include additional program modules as well as an operating system, one or more other application program modules, and program data. According to various embodiments, the application program modules (e.g., the summary screen display module 120 and the tabular template processing module 122) may include a device locator 124, a configuration tool 126, and a unique identifier converter 128, for example. In certain embodiments, the summary screen display module 120 and the tabular template processing module 122, including the device locator 124, the configuration tool 126, and the unique identifier converter 128, may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages.

The summary screen display module 120 and the tabular template processing module 122 may execute entirely on a user's computer or device, partly on the user's computer or device, as a stand-alone software package, partly on the user's computer or device and partly on a remote computer or entirely on a remote computer or server. In the latter scenario, the remote computer or server may be connected to the user's computer or device through any type of network, including a local area network (LAN) or a wide area network (WAN), or the connection may be made to an external computer (for example, through the Internet using an Internet Service Provider).

In various embodiments, the computer system/server 102 may communicate with one or more external devices 130 such as a keyboard, a pointing device, a display 132, etc.. The one or more external devices 130 and the display 132 may enable a user to interact with the computer system/server 102, and/or may enable the computer system/server 102 to communicate with one or more other computing devices. Such communication can occur via Input/Output (I/O) interfaces 134. In addition, the computer system/server 102 may communicate with one or more networks (e.g., network 138) via the network adapter 136. As depicted, the network adapter 136 may communicate with the other components of the computer system/server 102 via the bus 110. In some cases, the computer system/server 102 may include other hardware and/or software components. Examples may include, but are not limited to: microcode, device drivers, redundant processing units, external disk drive arrays, RAID systems, tape drives, and data archival storage systems, etc.

In various examples, the summary screen display module 120 may use the display 132 to display a tabular template to a user operating the computer system 102. The user may specify a unique device identifier for each of two or more building control devices 140A-140V in the tabular template. The user may also specify two or more point names for two or more parameters of the two or more building control devices 140A-140V in the tabular template, and in some cases an order of the two or more point names. In certain embodiments, the tabular template may include a formatting region for specifying one or more formatting parameters for each of the two or more point names specified in the tabular template. In some cases, the one or more formatting parameters may be applied to the current value of the two or more parameters displayed on the summary screen that correspond to the point names specified in the tabular template for each of the two or more devices 140A-140V identified in the tabular template. In some cases, the tabular template may include a device formatting region that may be configured to override the one or more formatting parameters specified in the formatting region for that particular building control device.

In some cases, the tabular template may be entered and/or edited using an application outside of the summary screen display module 120, and then the tabular template may be imported into the summary screen display module 120. For example, the tabular template may be entered and/or edited using Microsoft Excel™, and then the tabular template may be imported into the summary screen display module 120.

When the tabular template processing module 122 receives the tabular template, including the unique identifiers, the two or more point names, and in some cases the order of the two or more point names, the tabular template processing module 122 may process the tabular template by using the unique identifier converter tool 128 to convert the unique device identifiers into a corresponding device address that may be suitable for addressing the particular building control devices 140A-140V of the building automation system 104. The tabular template processing module 122 may output executable code to the summary screen display module 120. The summary screen display module 120 may then initiate the device locator tool 124 to use the device addresses and the point names to request the current values of the parameters identified by the point names, sometimes through the network 138, from the two or more building control devices 140A-140V specified in the tabular template.

When the summary screen display module 120 receives the current values of the parameters for the two or more devices 140A-140V, sometimes through the network 138, the summary screen display module 120 may initiate the configuration tool 126 to use the specified order of the two or more point names in the tabular template to organize the current values of the parameters in the specified order for the summary screen. The summary screen display module 120 may then use the formatting parameters and a descriptive name for the identified building control devices to display a summary screen to the user on the display 132. In some cases, the descriptive name may be more descriptive than the unique identifier entered into the tabular template and/or the device address. For example, the descriptive name may provide an indication of a device type, a device instance and a device location for the corresponding building control device. In various embodiments, the summary screen may show the current values of the parameters, in the specified order, that correspond to the point names that were specified in the tabular template for each of the two or more building control devices 140A-140V that were identified in the tabular template.

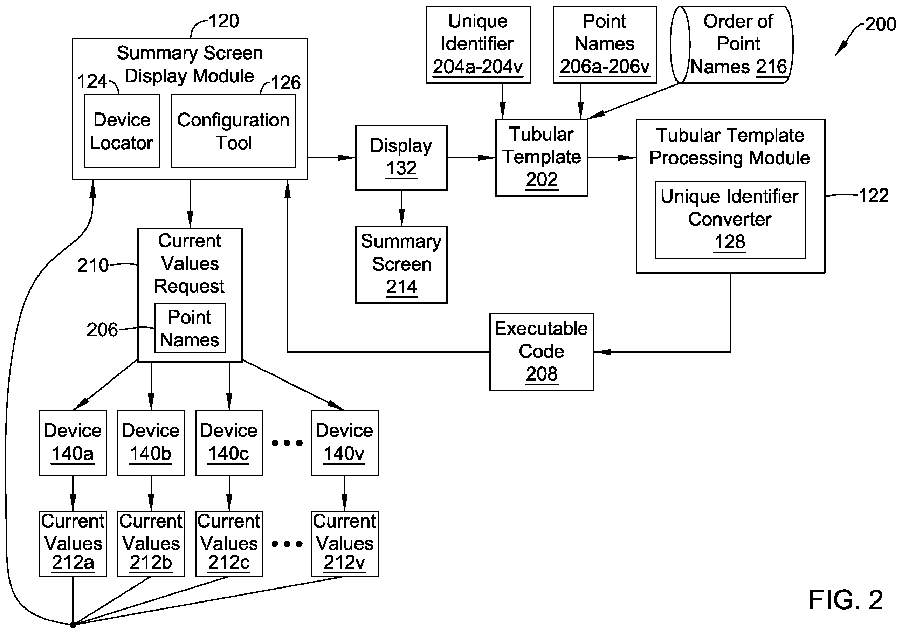

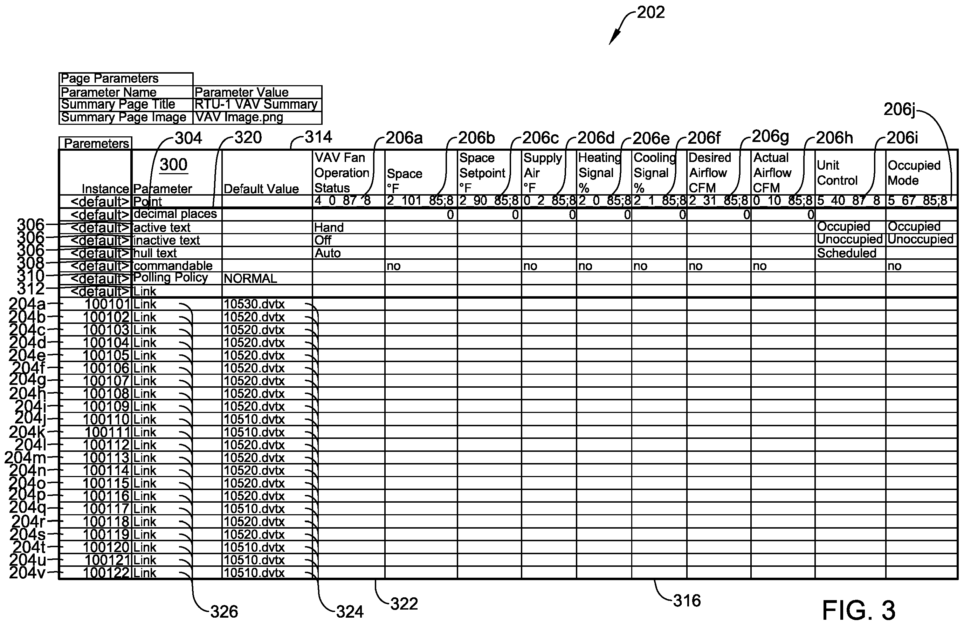

Figure 2 is a flow diagram of an illustrative method. Figure 2 will be described in conjunction with Figure 3, Figure 4, and Figures 5A-5C. Figure 2 depicts an illustrative method for generating a summary screen that summarizes parameters for building control devices of a building automation system. In certain embodiments, the method 200 may begin with the summary screen display module 120 using the display 132 to display a tabular template 202. In some cases, unique device identifiers 204A-204V, point names 206A-206J, and an order 216 of the point names may be specified in the tabular template 202. The unique device identifiers 204A-204V may be identifiers for the building control devices 140A-140V of Figure 1.

In some cases, the tabular template 202 may be entered and/or edited using an application outside of the summary screen display module 120, and then the tabular template may be imported into the summary screen display module 120. For example, the tabular template may be entered and/or edited using Microsoft Excel™, and then the tabular template may be imported into the summary screen display module 120.

Turning to Figure 3, an exemplary tabular template 202 is shown. The illustrative tabular template 202 may include a global point region 314 and a device identifying region 316. In certain embodiments, a user may specify unique device identifiers 204A-204V for particular building control devices (e.g., devices 140A-140V, from Figure 1) of the building control system 104 in the device identifying region 316 of the tabular template 202. The user may also specify point names 206A-206J that correspond to parameters 300 of the unique device identifiers 204A-204V in the global point region 314. Further, the user may specify the order 216 of the point names 206A-206J for the parameters 300 in the global point region 314 that the summary screen should display the parameters 300. For instance, in this case, the illustrative tabular template 202 has the following point name order 216: VAV Fan Operation Status 206A, Space °F 206B, Space Setpoint °F 206C, Supply Air °F 206D, Heating Signal % 206E, Cooling Signal % 206F, Desired Airflow CFM 206G, Actual Airflow CFM 206H, Unit Control 2061, and Occupied Mode 206J.

In certain embodiments, the tabular template 202 may include a formatting region 320 within the global point region 314 for specifying formatting parameters for each of the point names 206A-206J. In some cases, the formatting parameters may include a decimal places format 304 that may control the number of decimal places that are displayed for a current value of the corresponding parameter on the summary screen.

In some cases, the formatting parameters may include a text string format 306 that may allow an appropriate text string to be displayed on the summary screen, such as a text screen that describes a current condition of the corresponding parameter. For instance, the VAV Fan Operation Status may be either in a manual mode, an off mode, or an auto mode. If the VAV Fan is in the manual mode, the text string 306 may display "Hand" on the summary screen. The label "Hand" has been selected by the installer and put into the tabular template as shown. Similarly, if the VAV Fan is in the off mode, the text string 306 may display "Off". If the VAV Fan is in the auto mode, the text string 306 may display "Auto" on the summary screen.

In some cases, the formatting parameters may include a commandable format 308 that may allow adjustable parameters to be adjusted. As shown in the exemplary tabular template 202, the word "no" appears in the columns for Space °F, Supply Air °F, Heating Signal %, Cooling Signal %, Desired Airflow CFM, Actual Airflow CFM, and Occupied Mode. This signifies that these parameters cannot be adjusted by the user. However, the columns for VAV Fan Operation Status, Space Setpoint °F, and Unit Control are blank for the commandable format 308. This signifies that these parameter may be adjusted by the user via the summary screen.

In some cases, the formatting parameters may include a polling policy format 310 that identifies how often to update the current value of the parameter displayed on the summary screen. For example, currently the polling policy 310 is set for normal for all parameters in the tabular template 202. In some cases, the normal setting may be a default setting and polling for the current values of the parameters may occur every 1 minute. However, a different value may be specified for each point name, such as 1 second, 10 second, 3 minutes, 5 minutes, 10 minutes, 20 minutes, 30 minutes, every hour, etc. The installer may want some parameters to be updated (e.g. polled) more frequently than other parameters on the summary screen.

In some cases, the formatting parameters may include a link format 312 that specifies that a graphical representation of the identified devices may be accessible by selecting a link displayed on the summary screen. In some cases, the precise link that must be selected to gain access to the graphical representation may be specified. For instance, in some examples, the device name/description on the summary screen may be a hyperlink that when selected on the summary screen displays a graphical representation of the selected building control device. In some cases, the link format 312 may identify a link to a default graphical representation of a device, which may be overridden for a particular building control device by specifying a link for the particular device in the device identifying region 316 as further described below.

In some cases, the formatting parameters may include a display factor that may be a numeric value which is used to scale the displayed point value. For example, if the display factor is 10 and the point value is 100, the value displayed in the summary page may be 10 * 100, or 1,000. In some cases, the formatting parameters may include a security level that may restrict user access to the point value such that they can see the value but they cannot update the value. In some cases, the formatting parameters may include a binary (On/Off) image that may be an image with two states (on & off) that reflect the current state of the point. This can be used, for example, to show if a fan is running, a piece of equipment is operational, or a space is occupied. In some cases, the formatting parameters may include an analog image that may be an image that shows the current status of an analog item such as the position of a damper (0-100%), temperature of a space, or amount of air flowing through a system, for example. In some cases, the formatting parameters may include a confirm data entry that may be a flag (true/false) that may control whether a user is required to enter a comment when the point value is changed. In some cases, the formatting parameters may include user-role tags, in addition to security level, that may be a set of text-based descriptors that assist a user in identifying the type of point and how it is used in the system. In some cases, the formatting parameters may include a manual override command time that may automatically set the point value back to the original value after the configured duration, when a point value is changed from the summary page. In some cases, the formatting parameters may include a show manual override status that may be a status indicator (true/false) to indicate if the point has been overridden either from the user interface, the program running in the controller, or by using a switch on the device itself, for example. In some cases, the formatting parameters may include a show alarm status (e.g., unactivated alarm, activated alarm image, normal alarm status, etc.) that may be a status indicator to show if the point is in alarm and its current alarm status.

According to certain embodiments, the device identifying region 316 may include a device formatting region 322 that may be configured to override the global formatting parameters specified in the global point region 314. As shown in the tabular template 202, each cell in the formatting region 322 is blank. As a result, the formatting parameters specified in the global point region 314 will be applied to each building control device corresponding to the unique device identifiers 204A-204V. In addition, a graphical representation sub-region 324 of the device formatting region 322 may be used to specify a particular graphical representation for individual building control devices 140A-140V. In some cases, a particular graphical representation may be specified or, as shown in Figure 3, default graphical representations may be selected 324. Note, the default graphical representations may be selected depending on the type, model or other characteristics of the corresponding building control device. In the example tabular template, building control device 140A identified by device identifier 204A has a default graphical representations of 10530.dvtx, while building control device 204B has a different default graphical representations of 10520.dvtx. A link section 326 may be used to specify a link path that points to the location of the corresponding graphical representation specified in graphical representation sub-region 324.

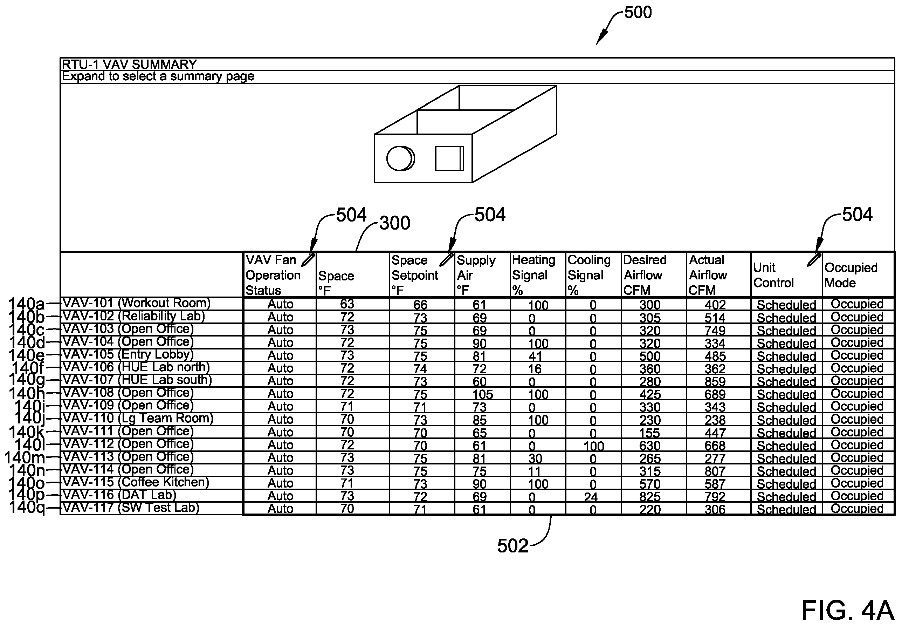

Referring back to Figure 2, the tabular template processing module 122 may receive the tabular template 202. The tabular template processing module 122 may initiate the unique identifier converter tool 128 to convert the unique device identifiers 204A-204V into their corresponding device addresses. In certain embodiments, the corresponding device addresses may be suitable for addressing each specific device (e.g., devices 140-140V, from Figure 1) across a network (wired or wireless). The tabular template processing module 122 may then output executable code 208 to the summary screen display module 120. In certain embodiments, the executable code 208 may include requests that reference the point names 206A-206J of each of the building control devices specified in the tabular template 202. The summary screen display module 120 may initiate the device locator tool 124 to use the device addresses to locate each identified device 140A-140V and send requests 210 to each identified building control device 140A-140V for the current values of the parameters that correspond to the point names 206A-206J specified in the tabular template 202. In response, the building control devices 140A-140V may send the current values of the requested parameters 212A-212V back to the summary screen display module 120. According to various embodiments, when the summary screen display module 120 receives the current values of the requested parameters 212A-212V, the summary screen display module 120 may initiate the configuration tool 126 to organize the current values of the parameters 212A-212V in the order 216 specified in the tabular template. The summary screen display module 120 may then access the organized current values of the parameters 212A-212V and produce a comprehensive record that includes individual records for each building control device (e.g., devices 140A-140F). The summary screen display module 120 may then use the display 132 to display a summary screen of the comprehensive record, such as shown in Figure 4A.

Figure 4A shows an illustrative summary screen 500. As shown, the summary screen 500 displays the current values 502 of the parameters 300 that correspond to the point names 206A-206J specified in the tabular template 202. In various embodiments, the current values 502 of the parameters 300 may be displayed in the order 216 as specified in the tabular template 202. In addition, each of the building control devices 140A-140V that was identified using the unique device identifiers 204A-204V in the tabular template 202 may be displayed. A descriptive name may be provided for each device. In some cases, and as shown in Figure 4A, the descriptive name may be more descriptive than the unique device identifier 204A-204V entered into the tabular template 202 and/or the device address used to address the building control devices 140A-140V. For example, the descriptive name may provide an indication of a device type (e.g. VAV), a device instance (e.g. 101) and a device location (e.g. Workout Room) for the corresponding building control device 140A. The device type, instance and device location may be stored in a database that is accessible by the summary screen display module 120.

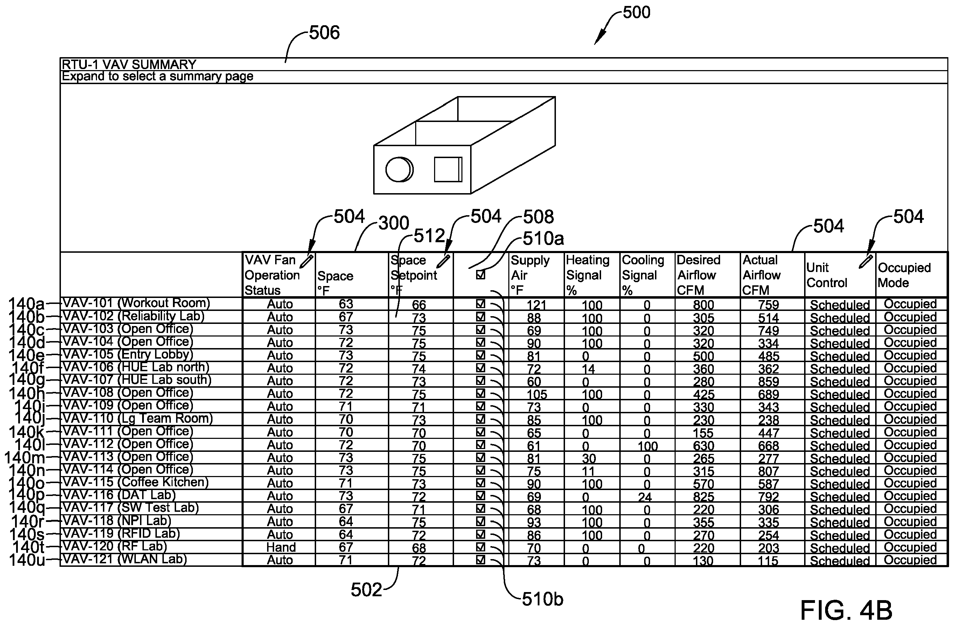

In some cases, the summary screen 500 may display an indication 504 that signifies that this parameter may be changed by the user. Turning to Figure 4B, the exemplary summary screen 500 of the comprehensive record 402 is depicted in an edit mode 506. In some cases, the edit mode 506 may be accessed by selecting one of the indications 504 in Figure 4A. In this example, the indication 504 for the Space Setpoint °F parameter has been selected in Figure 4A. As a result, the summary screen 500 enters an edit mode 506 and an additional column 508 appears in the summary screen. In some cases, the additional column 508 may provide a global selection box 510A that the user may select to change that particular parameter (e.g. Space Setpoint) for all of the listed building control devices 140A-140V. The additional column 508 may also provide a device specific selection box 510B that the user may to change that particular parameter (e.g. Space Setpoint) for an individual one of the listed building control devices 140A-140V.

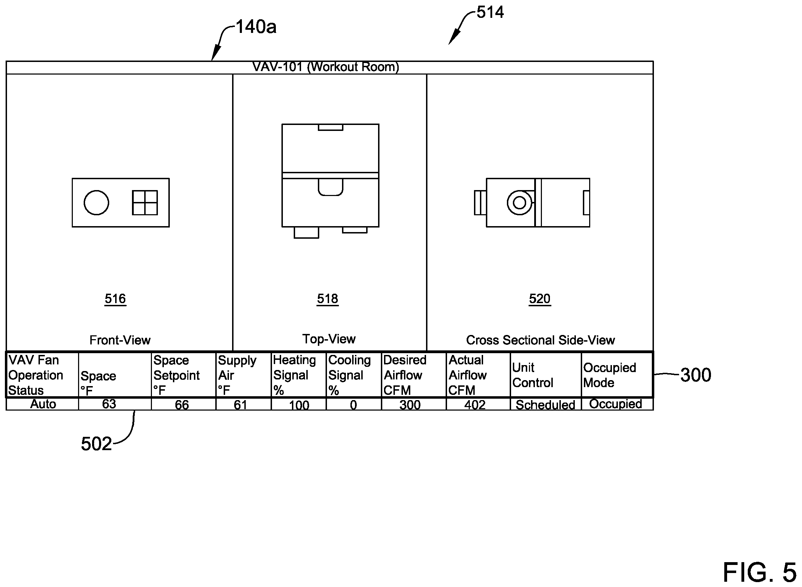

As seen in Figure 4A, the descriptive name of each of the devices 140A-140V in the summary screen may be a link to a graphical representation of the device. If a graphical representation is specified in the graphical representation sub-region 324 of the tabular template 202, the link may activate and display the identified graphical representation, as shown in Figure 5. Figure 5 shows an illustrative graphical representation of one of the devices in the summary screen 514 of Figure 4A. In some cases, access to screen 514 of Figure 5 may be achieved by clicking on the device name (i.e., VAV-101 (Workout Room) in Figures 4A or 4B.

In certain embodiments, as shown, the graphical representation of device 140A may include a front-view 516, a top-view 518, and a cross sectional side-view 520. However, these multiple views 516, 518, 520 are only one example of the graphical representation, and in some cases may be only one view. In some examples, the graphical representation may be animated, such as showing an animated fan if the fan is currently activated and/or showing a temperature value in red if the value is out of a defined range. In certain embodiments, screen 514 may include the current values 502 of the parameters 300, displayed in the order 216 specified in the tabular template 202. In some cases, screen 514 may also include current values of one or more parameters that are not displayed on the summary screen 500. Although not shown in Figure 5, the current values may be overlaid on the graphical representation of the building control device, and may be located at a location of a sensor, an actuator or other component to which it relates.

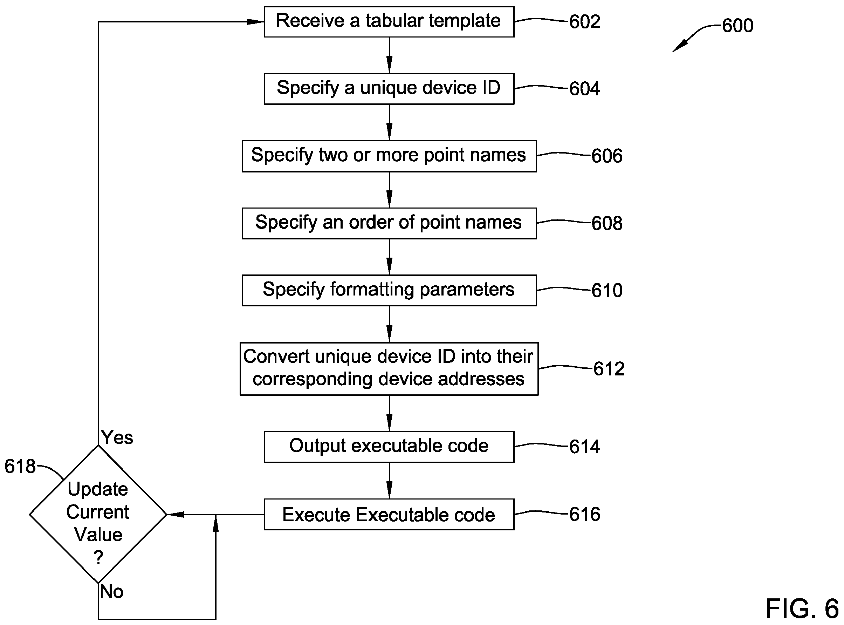

Figure 6 illustrates an illustrative method 600 for generating a summary screen that summarizes parameters of building control devices of a building automation system. The method 600 begins at step 602, where a tabular template may be received. At step 604, unique identifiers may be specified in the tabular template. In some examples, the tabular template may have a device identifying region where the unique identifiers may be specified. At step 606, point names may be specified in the tabular template. At step 608, an order of the point names may be specified in the tabular template. In some examples, the tabular template may have a global point region where the point names and the order of the point names may be specified.

At step 610, formatting parameters may be specified in the tabular template. In some examples, the tabular template may have a formatting region where the formatting parameters may be specified. In some examples, the formatting parameters may comprise a number of decimal places to display on the summary screen or a text string to display on the summary screen. In some examples, the formatting parameters may include a polling policy that identifies how often to update the current value on the summary screen. In various examples, the formatting parameters may also include a display factor, a binary (On/Off) image, an analog image, a confirmation of data entry, user-role tags, a manual override command time, a manual override status, and an alarm status (e.g., an unactived alarm image, an activated alarm image, a normal alarm status image, etc.). In other examples, other formatting parameters may be included. In some examples, the tabular template may also include a region to specify a graphical representation of the devices.

At step 612, the unique device identifiers may be converted into corresponding device addresses that can be used to access the building control devices often on a building control network. In some examples, the device addresses may be suitable for addressing each specific device. At step 614, executable code may be output. At step 616, the executable code may be executed to display a summary screen. In some examples, the summary screen may include a device name for each of the devices identified in the tabular template. In some examples, the summary screen may also include a current value for each of the parameters that correspond to the point names specified in the tabular template for each of the devices identified in the tabular template. In some examples, the current values may be displayed in the summary screen in the specified order. In some examples, the summary screen may include links that when selected, may display a graphical representation of the devices. In some examples, the device names may function as the links. In some examples, the graphical representations of the devices may be animated graphical representations. In some examples, the graphical representations may also display current values of parameters that are not displayed on the summary screen.

At step 618, it may be determined if it is time to update the current value of the parameters. If it is time to update the current value of the parameters (e.g. in accordance with a polling parameter), method 600 may be repeated. If, however, it is not time to update the current value of the parameter, method 600 may wait and then repeat step 618 to determine if it is time to update the current value of the parameters. In some cases, some parameters are polled at a different frequency than other parameters.

The specific steps detailed in Figure 6 may be performed in different orders, as desired. For example, the point names may be specified before the unique device identifiers. In some examples, the tabular template may not include a global point region or a device identifying region. These are just some example variations.

It should be understood that this disclosure is, in many respects, only illustrative. Changes may be made in details, particularly in matters of shape, size, and arrangement of steps without exceeding the scope of the disclosure. This may include, to the extent that it is appropriate, the use of any of the features of one example embodiment being used in other embodiments.

Preferred Embodiments of the Present Invention are as numbered below:
1. A method for generating a summary screen that summarizes two or more parameters of each of two or more devices of a building automation system, wherein each of the two or more parameters have a corresponding point name such that when a device of the two or more devices receives a request that references the point name, the device responds by sending a current value of the corresponding parameter for that device, the method comprising:
   specifying, in a tabular template, a unique device identifier for each of the two or more devices that are to be included in the summary screen;
   specifying, in the tabular template, two or more point names for the two or more parameters that are to be included in the summary screen;
   specifying, in the tabular template, the order of the two or more point names;
   processing the tabular template to convert the unique device identifier for each of the two or more devices into a corresponding device address that is suitable for addressing the device in the building automation system, and to output executable code that when executed displays the summary screen that comprises:
      a device name for each of the two or more devices identified in the tabular template;
      a current value for each of the parameters that correspond to the point names specified in the tabular template for each of the two more devices identified in the tabular template, wherein the current value for each of the parameters are displayed in the specified order in the summary screen; and
   executing the executable code to display the summary screen on a display.
2. The method of 1, wherein the executable code includes requests that, when executed, reference the point names specified in the tabular template for each of the two or more devices specified in the tabular template.
3. The method of 1, further comprising:
   specifying, in the tabular template, one or more formatting parameters that are applied to the current value in the summary screen for the parameter that corresponds to one of the point name specified in the tabular template.
4. The method of 3, wherein the tabular template comprises a formatting region for specifying the one or more formatting parameters for each of the two or more point names specified in the tubular template.
5. The method of 4, wherein the one or more formatting parameters specified in the formatting region for each of the two or more point names specified in the tubular template are applied to each of the two more devices identified in the tabular template.
6. The method of 5, wherein for each of the two more devices identified in the tabular template, the tabular template comprises a device formatting region for overriding the one or more formatting parameters specified in the formatting region for that device.
7. The method of 3, wherein the one or more formatting parameters comprises a number of decimal places to display on the summary screen.
8. The method of 3, wherein the one or more formatting parameters comprises a text string to display on the summary screen.
9. The method of 3, wherein the one or more formatting parameters comprises a polling policy that identifies how often to update the current value on the summary screen.
10. The method of 1, wherein for each of the two more devices identified in the tabular template, the tabular template comprises a region to specify a graphical representation of the corresponding device.
11. The method of 10, wherein each of the two or more devices identified in the tabular template in the summary screen includes a link, that when selected, displays the specified graphical representation of the device.
12. The method of 11, wherein the device name for each of the two or more devices functions as the link.
13. The method of 10, wherein the graphical representation of the corresponding device is an animated graphical representation.
14. The method of 10, wherein the graphical representation of the corresponding device displays current values of one or more parameters that are not displayed on the summary screen.
15. A method for generating a summary screen that summarizes two or more parameters of each of two or more devices of a building automation system, wherein each of the two or more parameters have a corresponding point name such that when a device of the two or more devices receives a request that references the point name, the device responds by sending a current value of the corresponding parameter for that device, the method comprising:
   specifying, in a device identifying region of a template, a unique device identifier for each of the two or more devices that are to be included in the summary screen;
   specifying, in a global point region of the template, two or more point names for the two or more parameters that are to be included in the summary screen for each of the two or more devices specified in the device identifying region;
   specify, in the global point region of the template, the order of the two or more point names;
   processing the template to output executable code that when executed displays the summary screen that comprises:
      a device name for each of the two or more devices identified in the device identifying region of a template;
      a current value for each of the parameters that correspond to the point names specified in the global point region of the template for each of the two more devices identified in the device identifying region of the template, wherein the current values for each of the parameters are displayed in the specified order in the summary screen; and
   executing the executable code to display the summary screen on a display.
16. The method of 15, wherein the executable code includes requests that, when executed, reference the point names specified in the global point region of the template for each of the two or more devices specified in the device identifying region of the template.
17. The method of 15, further comprising:
   specifying, in the global point region of the template, one or more formatting parameters that are applied to the current value in the summary screen for the parameter that corresponds to one of the point names specified in the global point region of the template.
18. The method of 17, wherein the one or more formatting parameters specified in the global point region of the template are applied to the current value in the summary screen for the parameter that corresponds to the one of the point names specified in the global point region of the template for each of the two or more devices specified in the device identifying region of the template.
19. The method of 18, wherein for each of the two more devices identified in the device identifying region of the template, the template comprises a device formatting region for overriding the formatting parameters specified in the global point region of the template.
20. A system for generating a summary screen that summarizes two or more parameters of each of two or more devices of a building automation system, wherein each of the two or more parameters have a corresponding point name such that when a device of the two or more devices receives a request that references the point name, the device responds by sending a current value of the corresponding parameter for that device, the system comprising:
   a tabular template processing module configured to:
      receive a tabular template that includes a unique device identifier for each of the two or more devices that are to be included in the summary screen and two or more point names for the two or more parameters that are to be included in the summary screen;
      convert the unique device identifier for each of the two or more devices into a corresponding device address that is suitable for addressing the device in the building automation system, and to output executable code that when executed displays the summary screen that comprises:
         a device name for each of the two or more devices identified in the tabular template;
         a current value for each of the parameters that correspond to the point names specified in the tabular template for each of the two more devices identified in the tabular template, wherein the current values for each of the parameters are displayed in the specified order in the summary screen;
   a summary screen display module configured to:
      execute the executable code, which when executed, uses the device addresses for the two or more devices that are to be included in the summary screen and the point names for the two or more parameters that are to be included in the summary screen to request the current values of the parameters that correspond to the point names from each of the two or more devices, and to display the summary screen on a display.

## Claims

1. A method for generating a summary screen that summarizes two or more parameters of each of two or more devices of a building automation system, wherein each of the two or more parameters have a corresponding point name such that when a device of the two or more devices receives a request that references the point name, the device responds by sending a current value of the corresponding parameter for that device, the method comprising:
specifying, in a tabular template, a unique device identifier for each of the two or more devices that are to be included in the summary screen;
specifying, in the tabular template, two or more point names for the two or more parameters that are to be included in the summary screen;
specifying, in the tabular template, the order of the two or more point names;
processing the tabular template to convert the unique device identifier for each of the two or more devices into a corresponding device address that is suitable for addressing the device in the building automation system, and to output executable code that when executed displays the summary screen that comprises:
a device name for each of the two or more devices identified in the tabular template;
a current value for each of the parameters that correspond to the point names specified in the tabular template for each of the two more devices identified in the tabular template, wherein the current value for each of the parameters are displayed in the specified order in the summary screen; and
executing the executable code to display the summary screen on a display.

2. The method of claim 1, wherein the executable code includes requests that, when executed, reference the point names specified in the tabular template for each of the two or more devices specified in the tabular template.

3. The method of claim 1, further comprising:
specifying, in the tabular template, one or more formatting parameters that are applied to the current value in the summary screen for the parameter that corresponds to one of the point name specified in the tabular template.

4. The method of claim 3, wherein the tabular template comprises a formatting region for specifying the one or more formatting parameters for each of the two or more point names specified in the tubular template.

5. The method of claim 4, wherein the one or more formatting parameters specified in the formatting region for each of the two or more point names specified in the tubular template are applied to each of the two more devices identified in the tabular template.

6. The method of claim 5, wherein for each of the two more devices identified in the tabular template, the tabular template comprises a device formatting region for overriding the one or more formatting parameters specified in the formatting region for that device.

7. The method of claim 3, wherein the one or more formatting parameters comprises a number of decimal places to display on the summary screen.

8. The method of claim 3, wherein the one or more formatting parameters comprises a text string to display on the summary screen.

9. The method of claim 3, wherein the one or more formatting parameters comprises a polling policy that identifies how often to update the current value on the summary screen.

10. The method of claim 1, wherein for each of the two more devices identified in the tabular template, the tabular template comprises a region to specify a graphical representation of the corresponding device.

11. The method of claim 10, wherein each of the two or more devices identified in the tabular template in the summary screen includes a link, that when selected, displays the specified graphical representation of the device.

12. The method of claim 11, wherein the device name for each of the two or more devices functions as the link.

13. The method of claim 10, wherein the graphical representation of the corresponding device is an animated graphical representation.

14. The method of claim 10, wherein the graphical representation of the corresponding device displays current values of one or more parameters that are not displayed on the summary screen.

15. A system for generating a summary screen that summarizes two or more parameters of each of two or more devices of a building automation system, wherein each of the two or more parameters have a corresponding point name such that when a device of the two or more devices receives a request that references the point name, the device responds by sending a current value of the corresponding parameter for that device, the system comprising:
a tabular template processing module configured to:
receive a unique device identifier for each of the two or more devices that are to be included in the summary screen and two or more point names for the two or more parameters that are to be included in the summary screen;
convert the unique device identifier for each of the two or more devices into a corresponding device address that is suitable for addressing the device in the building automation system, and to output executable code that when executed displays the summary screen that comprises:
a device name for each of the two or more devices identified in a tabular template application;
a current value for each of the parameters that correspond to the point names specified in the tabular template application for each of the two more devices identified in the tabular template application, wherein the current values for each of the parameters are displayed in the specified order in the summary screen;
▪a summary screen display module configured to:
execute the executable code, which when executed, uses the device addresses for the two or more devices that are to be included in the summary screen and the point names for the two or more parameters that are to be included in the summary screen to request the current values of the parameters that correspond to the point names from each of the two or more devices, and to display the summary screen on a display.
